# EUROPÄISCHE PATENTSCHRIFT

(11) **EP 0 613 814 B1**
(45) Veröffentlichungstag und Bekanntmachung des Hinweises auf die Patenterteilung: **27.11.1996**
(21) Anmeldenummer: 94102775.7
(22) Anmeldetag: 24.02.1994
(51) Int. Cl.: B62H 5/10

(54) **Getriebeschloss für Fahrräder**
Locking system for bicycle transmission
Serrure de transmission de bicyclette

(30) Priorität: 03.03.1993 DE 4306562
(43) Veröffentlichungstag der Anmeldung: 07.09.1994
(73) Patentinhaber: Sieber, Eberhard, D-98617 Meiningen (DE)
(72) Erfinder: Sieber, Eberhard, D-98617 Meiningen (DE)

(56) Entgegenhaltungen:
- DE-A- 3 211 704
- DE-A- 4 019 199
- DE-C- 445 139

## Beschreibung

Die Erfindung betrifft ein Getriebeschloß für Fahrräder, bestehend aus einem Schließ- und einem Blockiersystem zur Festlegung der Tretkurbelwelle in ihrer Drehbewegung und in ihrer axialen Lage im Tretlagergehäuse.

Aus der Offenlegungsschrift DE 32 11 704 ist ein Tretlagerschloß zur Diebstahlsicherung für Fahrräder bekannt, bei dem radial in das um etwa 2 bis 3 cm verlängerte Tretlagergehäuse ein Schließzylinder eingesetzt ist, durch das zwei in einer Keilführung geführte Schließbacken aus der Öffnungsstellung in die Schließstellung bewegt werden können, in der die Schließbacken an parallelen Abflachungen der Tretkurbelwelle anliegen und diese bei senkrechter Stellung der Pedalhebel festlegen. Nachteilig an diesem Tretlagerschloß ist, neben der ungünstigen Verlängerung des Tretlagergehäuses, insbesondere die Anordnung des Schließzylinders unmittelbar an der Außenwandung des Tretlagergehäuse. Durch diese leichte Zuganglichkeit kann der Schließzylinder leicht herausgebohrt und die Schließbacken geöffnet werden.

Nach den Offenlegungsschriften DE 90 05 510 und DE 90 15 395 sind auch Tretlagerschlösser bekannt geworden, bei denen der Verriegelungsmechanismus in einem von dem Tretlagergehäuse ausgehenden Rahmenrohr untergebracht ist. Dabei greift der Schließriegel in eine Verzahnung oder in eine Raste der Tretkurbelwelle und blockiert diese gegen Drehung. Der Nachteil dieser Tretlagerschlösser ist ebenfalls die leichte Zugänglichkeit des Schließzylinders.

Nach der DE-C-445 139 ist ein Tretlagerschloß für Fahrräder bekannt, bei dem ein Schließmechanismus teilweise in der Tretkurbelwelle angeordnet ist.

Der Erfindung liegt die Aufgabe zugrunde, ein Getriebeschloß für Fahrräder zu entwickeln, das in abgeschlossenem Zustand die Tretkurbelwelle in ihrer Drehbewegung blockiert und das nicht ohne erhebliche Beschädigung des Fahrradrahmens geöffnet oder aus dem Tretlagergehäuse entfernt werden kann.

Diese Aufgabe wird erfindungsgemäß dadurch gelöst, daß in einer Tretkurbelwelle in Achsrichtung hinter einer axialen an einem Zapfen der Tetkurbelwelle beginnenden Schlüsselbohrung, eine diametrale Ausnehmung vorhanden ist, in der ein Schließsystem und ein Verriegelungssystem angeordnet sind, dessen Schließriegel in seiner Schließstellung in ein Rahmenrohr des Fahrradrahmens eingreift.

Es ist zweckmäßig, das Getriebeschloß für Fahrräder so auszuführen, daß in der diametralen Ausnehmung der mit einer axialen Schlüsselbohrung versehenen Tretkurbelwelle als SchließSystem ein Zylinderschloß mit federnden Sperrstiften eingesetzt ist, das in einer mit der Schlüsselbohrung fluchtenden Hülsenbohrung einer in der diametralen Ausnehmung befestigten Schloßhülse durch einen Schlüssel drehbar aber in der Öffnungs- und Schließstellung fest einrastbar gelagert ist und das mit dem Verriegelungssystem über eine drehsicher an dem Zylinderschloß angebrachte Exzenterscheibe mit einem in eine Führungsnut in einem Schließriegel eingreifenden Exzenterzapfen in Verbindung steht.

Die Größe der Schließwinkel verschiedener Zylinderschlösser kann dadurch konstruktiv berücksichtigt werden, daß die Führungsnut im Schließriegel die Form einer Geraden, einer Kurve oder eine aus beiden zusammengesetzte Form hat, vorzugsweise soll die Führungsnut für eine ganze Schlüsselumdrehung aus einem Kreisringteil im Durchmesser der Exzentrizität des Exzenterzapfens und einer daran anschließenden geraden Nut gebildet sein.

Obwohl das Ausbohren des Zylinderschlosses wegen seines größeren Durchmessers gegenüber der zur Einführung des Schlüssels dienenden Axialbohrung in der Tretkurbelwelle schon sehr schwierig ist, soll eine zusätzliche Sicherung noch dadurch bewirkt werden, daß in der Hülsenbohrung in der Schloßhülse in Einsteckrichtung des Schlüssels vor dem Zylinderschloß eine Sicherungsscheibe, mit einem dem Schlüsselprofil entsprechenden zentralen Durchbruch, lose drehbar oder durch eine Federscheibe leicht gebremst eingesetzt ist.

Ein weiteres Erschwernis beim Ausbau des Getriebeschlosses im abgeschlossenen Zustand wird dadurch erreicht, daß der Schließriegel in seiner Schließstellung, vorzugsweise bei vertikaler Lage der Tretkurbeln, in das Unterrohr des Fahrradrahmens eingreift.

Aus fertigungstechnischen Gründen ist es vorteilhaft, daß die diametrale Ausnehmung in der Tretkurbelwelle als Langlochbohrung in der Art eines Querschlitzes ausgebildet ist.

Die mit der Erfindung erzielten Vorteile bestehen insbesondere darin, daß das erfindungsgemäße Getriebeschloß im abgeschlossenen Zustand durch die bei einem Diebstahl möglichen gewaltsamen Einwirkungen nicht geöffnet werden kann. Eine Öffnung oder Demontage des Getriebeschlosses kann auch mit den in Werkstätten normalerweise vorhandenen Werkzeugen nur bei erheblicher Beschädigung des Fahrradrahmens erreicht werden. Zur Demontage dieses Getriebeschlosses sind Spezialwerkzeuge erforderlich, die dem Hersteller oder speziellen Vertragswerkstätten zur Verfügung stehen. Vorteilhaft ist ebenfalls, daß, neben dem fabrikmäßigen Einbau des Getriebeschlosses nach dieser Erfindung, auch alle vorhandenen Fahrräder mit solchen Getriebeschlössern nachgerüstert werden können, weil am Fahrradrahmen keine Veränderungen vorgenommen werden müssen.

Ein Ausführungsbeispiel der Erfindung ist in der Zeichnung dargestellt und im folgenden näher beschrieben.

Es zeigen:

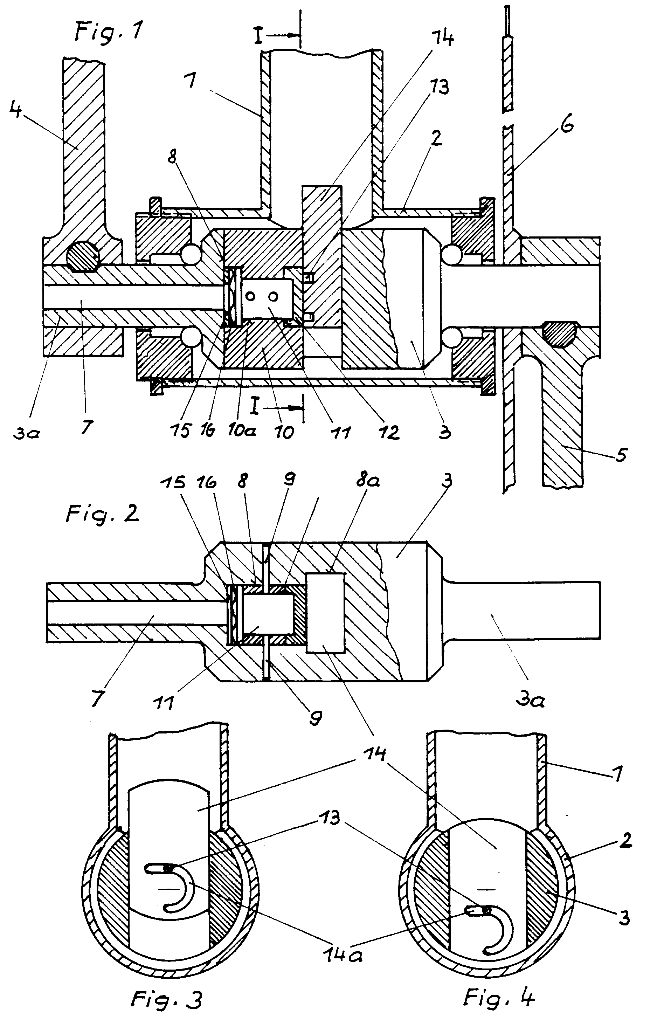

- Fig. 1: Eine Seitenansicht eines Getriebeschlosses im Längsschnitt bei geschlossenem Schließriegel;
- Fig.2: Eine um 90° gedrehte Seitensnsicht der Tretkurbelwelle des Getriebeschlosses entsprechend Fig. 1, teilweise im Schnitt;
- Fig.3: Die Draufsicht auf das Getriebeschloß nach Fig. 1 im Schnitt I - I;
- Fig.4: Die Draufsicht auf das Getriebeschloß nach Fig. 1 im Schnitt I - I, jedoch bei geöffnetem Schließriegel.

An dem Fahrradrahmen mit dem Unterrohr 1 ist in dem Tretlagergehäuse 2 die Tretkurbelwelle 3 mit den Tretkurbeln 4, 5 und dem Kettenrad 6 gelagert. Die Tretkurbelwelle 3 hat eine an ihrem Zapfen 3a beginnende, axial verlaufende Schlüsselbohrung 7, die in eine diametrale Ausnehmung 8 mündet, welche hier in der Breite abgesetzt ausgeführt ist. Im schmäleren Teil 8a der Ausnehmung 8 ist durch Stifte 9 eine Schloßhülse 10 befestigt, die gewissermaßen als Verlängerung der Schlüsselbohrung 7 eine Hülsenbohrung 10a hat, in der ein Zylinderschloß 11 mit federnden Sperrstiften und eine mit dem Zylinderschloß 11 drehsicher verbundene Exzenterscheibe 12 mit einem Exzenterzapfen 13 durch einen in die Schlüsselbohrung 7 einzuführenden Schlüssel drehbar aber in der Öffnungs- und in der Schließstellung fest einrastbar gelagert sind. Im breiteren Teil 8b der Ausnehmung 8 ist der Schließriegel 14 radial beweglich geführt. Die radiale Bewegung des Schließriegels 14 wird bei der Drehung des Zylinderschlosses 11 und der mit diesem verbundenen Exzenterscheibe 12 von dem Exzenterzapfen 13 bewirkt, der in der Art eines Kulissensteines in eine Führungsnut 14a im Schließriegel 14 eingreift. Zur Sicherung des Zylinderschlosses 11 gegen Ausbohren ist in die Hülsenbohrung 10a in der Schloßhülse 10 in Einsteckrichtung des Schlüssels vor dem Zylinderschloß 11 eine Sicherungsscheibe 15, die einen dem Schlüsselprofil entsprechenden zentralen Durchbruch aufweist, durch eine Federscheibe 16 in ihrer Drehmöglichkeit leicht gebremst eingelegt.

Zur Betätigung des Getriebeschlosses wird der passende Schlüssel in die Schlüsselbohrung 7 eingeschoben und gegebenenfalls unter kleinen Schwenkbewegungen durch den zentralen formschlüssigen Durchbruch der Sicherungsscheibe 15 durchgeführt und in der markierten Stellung in das Zylinderschloß 11 eingesteckt. In der Endstellung des Schlüssels federn die Sperrstifte in die Öffnungsstellung und der Schloßzylinder kann gedreht werden. Dabei dreht sich auch die Exzenterscheibe 12 und deren Exzenterzapfen 13 gleitet zuerst in dem kreisförmigen Teil der Führungsnut 14a bis zum geraden Teil, wo die Querbewegung des Schließriegels 14 bewirkt wird. Diese Form der Führungsnut ist für einen Schließwinkel des Zylinderschlosses 11 entsprechend einer vollen Umdrehung des Schlüssels bestimmt.

### AUFSTELLUNG DER VERWENDETEN BEZUGSZEICHEN

- 1: Unterrohr des Fahrradrahmens
- 2: Tretlagergergehäuse
- 3: Tretkurbelwelle
- 3a: Zapfen
- 4 und 5: Tretkurbeln
- 6: Kettenrad
- 7: Schlüsselbohrung
- 8: diametrale Ausnehmung
- 8a: schmälerer Teil der Ausnehmung
- 8b: breiterer Teil der Ausnehmung
- 9: Stift
- 10: Schloßhülse
- 10a: Hülsenbohrung
- 11: Zylinderschloß
- 12: Exzenterscheibe
- 13: Exzenterzapfen
- 14: Schließriegel
- 14a: Führungsnut
- 15: Sicherrungsscheibe
- 16: Federscheibe

## Patentansprüche

1. Getriebeschloß für Fahrräder, bestehend aus einem Schließ- und Blockiersystem zur Festlegung der Tretkurbelwelle in ihrer Drehbewegung und in ihrer axialen Lage im Tretlagergehäuse,
**dadurch gekennzeichnet,**
daß in einer Tretkurbelwelle (3) Achsrichtung hinter einer axialen an einem Zapfen (3a) der Tetkurbelwelle (3) beginnenden Schlüsselbohrung (7), eine diametrale Ausnehmung (8) vorhanden ist, in der ein Schließsystem und ein Verriegelungssystem angeordnet sind, dessen Schließriegel (14) in seiner Schließstellung in ein Rahmenrohr des Fahrradrahmens eingreift.

2. Getriebeschloß für Fahrräder nach Anspruch 1,
**dadurch gekennzeichnet,**
daß in der diametralen Ausnehmung (8) der mit einer axialen Schlüsselbohrung (7) versehenen Tretkurbelwelle (3) als Schließsystem ein Zylinderschloß (11) mit federnden Sperrstiften eingesetzt ist, das in einer mit der Schlüsselbohrung (7) fluchtenden Hülsenbohrung (10a) einer in der diametralen Ausnehmung (8) befestigten Schloßhülse (10) durch einen Schlüssel drehbar aber in der Öffnungs- und Schließstellung fest einrastbar gelagert ist und das mit dem Verriegelungssystem über eine drehsicher an dem Zylinderschloß (11) angebrachte Exzenterscheibe (12) mit einem in eine Führungsnut (14a) in einem Schließriegel (14) eingreifenden Exzenterzapfen (13)in Verbindung steht.

3. Getriebeschloß für Fahrräder nach Anspruch 1 und 2,
**dadurch gekennzeichnet,**
daß die Führungsnut (14a) im Schließriegel (14) die Form einer Geraden, einer Kurve oder eine aus beiden zusammengesetzte Form hat, vorzugsweise soll die Führungsnut (14a) für eine ganze Schlüsselumdrehung aus einem Kreisringteil entsprechend dem Durchmesser der Exzentrizität des Exzenterzapfens (13) und einer daran anschließenden geraden Nut gebildet sein.

4. Getriebeschloß für Fahrräder nach Ansprüchen 1 bis 3,
**dadurch gekennzeichnet,**
daß in der Hülsenbohrung (10a) in der Schloßhülse (10)in Einsteckrichtung des Schlüssels vor dem Zylinderschloß (11) eine Sicherungsscheibe (15), mit einem dem Schlüsselprofil entsprechenden zentralen Durchbruch, lose drehbar oder durch eine Federscheibe (15) leicht gebremst eingesetzt ist.

5. Getriebeschloß für Fahrräder nach Ansprüchen 1 bis 4,
**dadurch gekennzeichnet,**
daß der Schließriegel (14) in seiner Schließstellung in das Unterrohr (1) des Fahrradrahmens eingreift.

6. Getriebeschloß für Fahrräder nach Ansprüchen 1 bis 5,
**dadurch gekennzeichnet,**
daß die diametrale Ausnehmung (8) in der Tretkurbelwelle (3) als Langlochbohrung in der Art eines Querschlitzes ausgebildet ist.

## Claims

1. A drive lock for bicycles, comprising a locking system to prevent the pedal shaft from rotating and fix it in the axial position thereof in the pedal shaft housing, characterized in that, as viewed in the axial direction of a pedal shaft (3), behind an axial key bore (7) starting from a pivot (3a) of said pedal shaft (3), a diametral recess (8) is provided in which a locking system and a blocking system are arranged, the latch (14) of which penetrates into a tube of the bicycle frame in the locking position.

2. A drive lock for bicycles as recited in claim 1, characterized in that a cylinder lock (11) with locking pins is positioned as locking system in the diametral recess (8) in the pedal shaft (3) provided with said key bore (7), and is supported in a socket bore (10a) for a lock socket (10) fixed in said diametral recess (8), said socket bore being in alignment with said key bore (7), so that said cylinder lock is able to be rotated with the help of a key, but is able to be fixedly snapped in the unlocked position and in the locked position, and is attached to the locking system through an eccentric disk (12) positioned on said cylinder lock (11) and provided with an eccentric pivot (13) engaging a guiding groove (14a) in a locking latch (14).

3. A drive lock for bicycles as recited in claim 1 or 2, characterized in that said guiding groove (14a) in the locking latch (14) has the shape of a straight line, a curved line or a combined shape thereof, and said guiding groove (14a) comprises preferably a portion shaped as an arc of a circle corresponding in diameter with said eccentric pivot (13), and a successive rectilinear portion, for one complete revolution of the key.

4. A drive lock for bicycles as recited in claims to 3, characterized in that in said socket bore (10a), a protecting disk (15) is positioned in the lock socket (10) ahead of said cylinder lock (11) as viewed in the direction of insertion of the key, and has a central opening matching the profile of the key, such that said protecting disk is able to rotate freely or under a slight braking action from a resilient disk (16).

5. A drive lock for bicycles as recited in claims 1 to 4, characterized in that said locking latch (14) penetrates into the lower tube (1) of the bicycle frame in the locked position.

6. A drive lock for bicycles as recited in claims 1 to 5, characterized in that said diametral recess (8) in the pedal shaft (3) has the shape of an elongated hole, similar to that of a transverse slot.

## Revendications

1. Serrure de transmission pour bicyclettes, constituée d'un système de fermeture et de blocage en vue d'empêcher l'arbre de pédalier de tourner et de l'immobiliser dans sa position axiale dans le boîtier de palier de pédalier,
caractérisée en ce que, dans la direction de l'axe d'un arbre de pédalier (3), en arrière d'un alésage axial de clé (7) commençant sur un tourillon (3a) de l'arbre de pédalier (3), il est prévu un évidement diamétral (8) dans lequel sont disposés un système de fermeture et un système de verrouillage dont le verrou de fermeture (14) s'engage dans un tube du cadre de la bicyclette lorsqu'il se trouve dans sa position de fermeture.

2. Serrure de transmission pour bicyclettes selon la revendication 1, caractérisée en ce que dans l'évidement diamétral (8) de l'arbre de pédalier (3) doté d'un alésage axial de clé (7), une serrure à cylindre (11) à tige de blocage à ressort est placée comme système de fermeture, et est montée dans un alésage de douille (10a), aligné sur l'alésage de clé (7), d'une douille de clé (10) fixée dans l'évidement diamétral (8), de manière à pouvoir tourner à l'aide d'une clé et cependant, à pouvoir s'encliqueter fixement dans la position d'ouverture et dans la position de fermeture, et qui est relié au système de verrouillage par l'intermédiaire d'un disque excentrique (12) installé sur la serrure à cylindre (11) et comportant un tourillon excentrique (13) s'engageant dans une rainure de guidage (14a) pratiquée dans un verrou de fermeture (14).

3. Serrure de transmission pour bicyclettes selon la revendication 1 ou 2, caractérisée en ce que la rainure de guidage (14a) pratiquée dans le verrou de fermeture (14) présente la forme d'une droite ou d'une courbe, ou une forme constituée de l'assemblage de ces deux formes, et la rainure de guidage (14a) doit de préférence être formée d'une partie en arc de cercle correspondant au diamètre de l'excentricité du tourillon excentrique (13) et d'une rainure rectiligne qui s'y raccorde, en vue d'une rotation de la clé par un tour complet.

4. Serrure de transmission pour bicyclettes selon les revendications 1 à 3, caractérisée en ce que dans l'alésage de douille (10a) un disque de protection (15) est placé dans la douille de serrure (10) en avant de la serrure à cylindre (11) dans la direction d'insertion de la clé, et présente un orifice central correspondant au profil de la clé, de manière à pouvoir tourner librement ou à être légèrement freiné par un disque à ressort (16).

5. Serrure de transmission pour bicyclettes selon les revendications 1 à 4, caractérisée en ce que le verrou de fermeture (14) s'engage dans le tube inférieur (1) du cadre de la bicyclette lorsqu'il se trouve dans sa position fermée.

6. Serrure de transmission pour bicyclettes selon les revendications 1 à 5, caractérisée en ce que l'évidement diamétral (8) pratiqué dans l'arbre de pédalier (3) est configuré comme alésage en trou oblong, à la manière d'une fente transversale.
